Europäisches Patentamt

European Patent Office

Office européen des brevets

(11) Veröffentlichungsnummer : **0 357 988 B1**

## (12) EUROPÄISCHE PATENTSCHRIFT

(45) Veröffentlichungstag der Patentschrift :
**25.11.92 Patentblatt 92/48**

(21) Anmeldenummer : **89114792.8**

(22) Anmeldetag : **10.08.89**

(51) Int. Cl.⁵ : **B60P 3/16, E04G 21/04**

(54) Fahrbare Betonpumpe.

(30) Priorität : **07.09.88 DE 3830315**

(43) Veröffentlichungstag der Anmeldung :
**14.03.90 Patentblatt 90/11**

(45) Bekanntmachung des Hinweises auf die
Patenterteilung :
**25.11.92 Patentblatt 92/48**

(84) Benannte Vertragsstaaten :
**AT DE ES FR GB IT**

(56) Entgegenhaltungen :
**EP-A- 0 048 076**
**DE-A- 944 214**
**DE-A- 2 633 334**
**DE-A- 2 711 787**
**DE-A- 3 408 172**

(73) Patentinhaber : **PUTZMEISTER-WERK**
**MASCHINENFABRIK GMBH**
**Max-Eyth-Strasse 2-38**
**W-7447 Aichtal 2 (DE)**

(72) Erfinder : **Alwes, Dieter**
**Reutestrasse 26**
**W-7024 Filderstadt 4 (DE)**
Erfinder : **Schillinger, Dieter**
**Eichendorffweg 10**
**W-7303 Neuhausen/Filder (DE)**

(74) Vertreter : **Wolf, Eckhard, Dr.-Ing.**
**Patentanwälte Wolf & Lutz Hauptmannsreute**
**93**
**W-7000 Stuttgart 1 (DE)**

**Beschreibung**

Die Erfindung betrifft eine fahrbare Betonpumpe mit einem zwei- oder mehrachsigen Fahrgestell, einem an einem vorderachsnahen Mastbock um eine vertikale Achse drehbar gelagerten Verteilermast, zwei als Teleskopbeine ausgebildeten, mit ihrem Teleskoprohr an einem starr mit dem Mastbock verbundenen Tragrahmen angeordneten, diagonal nach vorne weisenden vorderen Stützbeinen und zwei ausstellbaren hinteren Stützbeinen.

Die Diagonalteleskopbeine am Mastbock ermöglichen es, daß die Betonpumpe auch in engen Baustellen aufgestellt werden kann, in denen Fahrzeuge mit vorderen Schwenkbeinen oder Teleskopschwenkbeinen keinen Platz mehr finden würden. Bei einer offenkundig vorbenutzten Betonpumpe dieser Art sind die hinteren Stützbeine an einem starr mit dem Fahrgestell verbundenen Rahmen hinter der Hinterachse angeordnet und seitlich teleskopierbar. Eine derartige Anordnung der hinteren Stützbeine ist z.B. aus DE-A--2 633 334 bekannt. Das bedeutet, daß die vom Verteilermast kommenden, über den Mastbock abzuführenden Kräfte teilweise über die gesamte Länge des Fahrzeugs zu den rückwärtigen Stützbeinen geleitet werden müssen. Dazu ist eine aufwendige und schwere Fahrgestellkonstruktion erforderlich. Auch die Baulänge des Fahrgestells ist relativ groß, da die hinteren Stützbeine hinter der Hinterachse eine aufwendige Auffangkonstruktion erfordern. Da der Abstand zwischen den Angriffspunkten der vorderen und rückwärtigen Stützbeine relativ groß ist, hat die Rahmenkonstruktion hohe Verwindungskräfte aufzunehmen, die eine entsprechende Aussteifung der Rahmenkonstruktion erfordern. Das Gewicht der rückwärtigen Stützbeine und der zusätzlichen Aussteifung der Rahmenkonstruktion wirken fast ausschließlich auf die Hinterachse und reduzieren somit deren Lastreserve für andere Aufbauten. Die Stützbeinanordnung im Bereich hinter den Hinterachsen stellt außerdem ein Hindernis bei der Montage und bei der Handhabung der Betonpumpe dar: Sie muß unter der Stützkonstruktion hindurch schräg auf das Fahrgestell aufgeschoben werden.

Bei fahrbaren Betonpumpen ist es zwar an sich bekannt, die hinteren Stützbeine als Schwenkbeine auszubilden und vor der Hinterachse an einem eigens hierfür vorgesehenen Tragrahmen anzulenken. Dieser Tragrahmen reicht jedoch vom Mastbock relativ weit nach hinten und nimmt somit viel Platz in Anspruch, der bei der Unterbringung der Betonpumpe stört und dementsprechend eine vergrößerte Baulänge des Fahrgestells erfordert. Hinzu kommt, daß der überwiegende Teil des Gewichtes dieser Tragrahmenkonstruktion auf die Hinterachse wirkt und somit deren Tragreserven reduziert.

Der Erfindung liegt die Aufgabe zugrunde, die fahrbare Betonpumpe der eingangs beschriebenen Art hinsichtlich ihrer Abstützkonstruktion dahingehend zu verbessern, daß der Kraftfluß über möglichst kurze Strecken unter geringstmöglicher Verwindung übertragen werden kann und daß die Last der Abstützanordnung im Vergleich zu bekannten Konstruktionen reduziert und in der Fahrstellung möglichst nahe zur Vorderachse verschoben wird.

Zur Lösung dieser Aufgabe wird gemäß der Erfindung vorgeschlagen, daß die hinteren Stützbeine im Bereich des rückwärtigen Endes der Teleskoprohre der am Fahrgestell jeweils gegenüberliegenden vorderen Stützbeine um eine vertikale Achse von ihrer parallel zum Fahrgestell nach hinten weisenden Fahrstellung in ihre diagonal nach hinten und außen weisende Abstützstellung schwenkbar gelagert sind. Vorteilhafterweise sind dabei die hinteren Stützbeine an einem am rückwärtigen Ende je eines der Teleskoprohre angeordneten Lagerauge oder Ausleger angelenkt.

Gemäß einer vorteilhaften Ausgestaltung der Erfindung sind die Teleskoprohre über Kreuz mit den beiden Schenkeln eines mit dem Mastbock verbundenen, in Draufsicht U-förmig nach hinten offenen Tragrahmens starr verbunden. Statt an den Teleskoprohren können die hinteren Stützbeine dabei an einem am freien Ende je eines der Tragrahmenschenkel angeordneten Lagerauge oder Ausleger angelenkt werden. Der bis zum Mastbock reichende Freiraum zwischen den Schenkeln des U-förmigen Tragrahmens steht weiteren Aufbauten, insbesondere der Betonpumpe bis zum Kreuzungs- bzw. Durchdringungsbereich der Teleskoprohre zur Verfügung. Auf diese Weise ist eine erhebliche Reduzierung der Baulänge gegenüber bekannten Konstruktionen fahrbarer Betonpumpen möglich.

Um eine ausreichende Abstützbreite im Bereich der vorderen Stützbeine zu erreichen, sind die Teleskoprohre so angeordnet, daß sie sich in verschiedener Höhe vorzugsweise im freien Bereich zwischen den Tragrahmenschenkeln kreuzen. Um die Verwindungssteifigkeit zu erhöhen, sind die Teleskoprohre zweckmäßig mit einem weiteren Rohr unter Bildung von übereinander angeordneten Doppelrohren verbunden, welche einander paarweise so durchdringen, daß die Teleskoprohre im Durchdringungsbereich durchgehend sind und der Durchgang in den weiteren Rohren durch die durchgehenden Teleskoprohre unterbrochen ist. Der Durchdringungsbereich der Doppelrohre befindet sich vorteilhafterweise im freien Bereich zwischen den Tragrahmenschenkeln.

Eine weitere bevorzugte Ausgestaltung der Erfindung sieht vor, daß die hinteren Stützbeine an einem am rückwärtigen Ende je eines der Doppelrohre angeordneten, sich vorzugsweise über die Höhe der Doppelrohre erstreckenden Gabelgelenk angelenkt sind. Die hinteren Stützbeine tragen zu diesem Zweck an ihrem stirnseitigen Ende eine Lagerhülse, die paßgenau zwischen zwei Lagerlappen des Gabelgelenks eingreift und dort mit einem durchgehenden Gelenkbolzen gesichert ist. Die Doppelrohre bilden miteinander, mit den Schenkeln des Tragrahmens und mit dem Mastbock eine kompakte Schweißkonstruktion. Um eine möglichst kurze Baulänge zu erzielen, wird der Abstand der Anlenkpunkte der hinteren Stützbeine vom Mastbock zweckmäßig kleiner als die Länge der Teleskoprohre der vorderen Stützbeine gewählt.

Gemäß einer weiteren bevorzugten Ausgestaltung der Erfindung bilden die Abstützpunkte der vier ausgestellten Stützbeine näherungsweise die Ecken eines Quadrats, dessen Diagonale sich etwa im Mittelpunkt der vom Schwerpunkt der fahrbaren Betonpumpe in allen möglichen Verteilermaststellungen überstrichenen Schwerpunktskreisfläche schneiden. Der Mittelpunkt des Schwerpunktkreises liegt dabei vom Mastbock aus auf der Fahrzeuglängsachse leicht nach hinten versetzt.

Mit den erfindungsgemäßen Maßnahmen wird vor allem eine gute Verteilung der Achslasten, ein relativ kleiner Radstand, eine geringe Verwindung sowie bei gegebenem Schwerpunktkreis eine geringe Abstützbreite erzielt.

Im folgenden wird die Erfindung anhand eines in der Zeichnung dargestellten vorteilhaften Ausführungsbeispiels näher erläutert. Es zeigen

Fig. 1 eine Seitenansicht einer fahrbaren Betonpumpe mit Verteilermast und Abstützvorrichtung;
Fig. 2 eine Draufsicht auf das Fahrgestell der Betonpumpe mit Abstützvorrichtung.

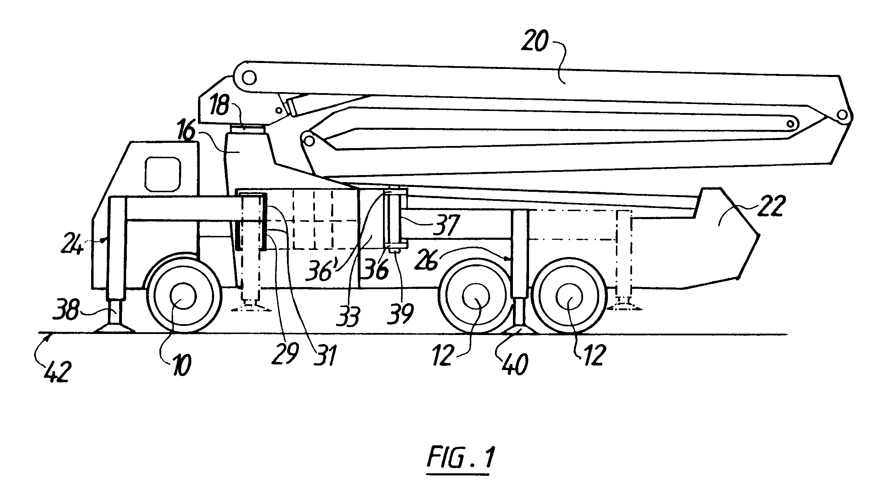

Die in Fig. 1 dargestellte fahrbare Betonpumpe besteht im wesentlichen aus einem eine Vorderachse 10 und zwei Hinterachsen 12 aufweisenden Fahrgestell, einem an einem vorderachsnahen Mastbock 16 um eine vertikale Achse 18 drehbar gelagerten mehrarmigen Betonverteilermast 20, einer über einen Beschickungsbehälter 22 mit Beton beschickbaren, im übrigen nicht dargestellten Dickstoffpumpe und einer aus zwei vorderen Stützbeinen 24 und zwei hinteren Stützbeinen 26 bestehenden Abstützvorrichtung.

Die vorderen Stützbeine 24 sind als Teleskopbeine ausgebildet, deren Teleskoprohre 28 schräg nach vorne weisen und über Kreuz an den Schenkeln 30 eines nach hinten offenen, mit dem Mastbock 16 starr verbundenen Tragrahmens 32 angeschweißt sind. Die Teleskoprohre 28 kreuzen sich im freien Zwischenbereich zwischen den Rahmenschenkeln 30 in verschiedener Höhe. Sie sind jeweils mit einem weiteren Rohr unter Bildung von Doppelrohren 31 verbunden, die einander im Kreuzungsbereich 34 so durchdringen, daß die Teleskoprohre 28 im Durchdringungsbereich durchgehend sind und der Durchgang in dem jeweils anderen Rohr durch die durchgehenden Teleskoprohre unterbrochen ist. Auf diese Weise erhält man eine stabile und dennoch leichte Verbundkonstruktion mit dem Tragrahmen und dem Mastbock, die für die Übertragung der beim Arbeiten mit dem Betonverteilermast auftretenden Kräfte besonders geeignet ist.

Die hinteren Stützbeine 26 sind jeweils an einem nach hinten auskragend an den Doppelrohren 31 angeschweißten Gabelgelenk 33 angelenkt. Die Gabelgelenke 33 weisen jeweils zwei in Höhe der Doppelrohrober- und -unterkante angeordnete Lagerlappen 36,36' auf, durch die ein Gelenkbolzen 39 hindurchgeführt ist. Eine am stirnseitigen Ende des Stützbeins 26 angeformte Lagerhülse 37 ist an dem Gelenkbolzen 39 um dessen Achse schwenkbar gelagert und paßgenau zwischen den einander zugewandten Stirnflächen der Lagerlappen 36,36' geführt. Da somit die Stützbeine 26 auf beiden Seiten des Fahrgestells 10 in gleicher Höhe angelenkt sind, können sie identisch, d.h. mit gleichlangen Stützfüßen 40 ausgebildet werden. Insgesamt erhält man dadurch einen kompakten Aufbau, der weit in Richtung der Vorderachse 10 gerückt ist, so daß das Gewicht der Aufstellvorrichtung im Fahrzustand zum überwiegenden Teil auf der Vorderachse lastet.

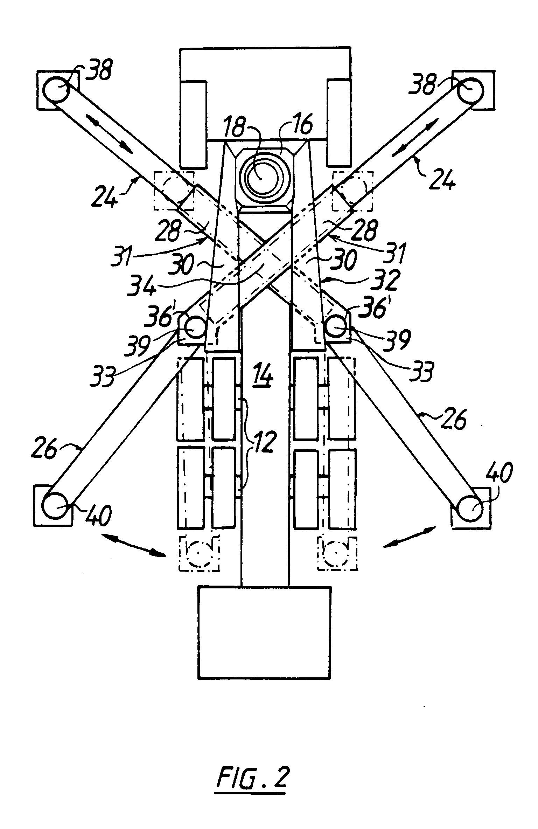

Das Teleskopieren der vorderen Stützbeine 24 und das Verschwenken der rückwärtigen Stützbeine 26 erfolgt mit nicht dargestellten hydraulischen Mitteln. Ebenso werden die im Fahrzustand eingezogenen teleskopierbaren Stützfüße 38,40 in der ausgestellten Stellung hydraulisch auf den Untergrund 42 abgesenkt. Die beschriebene Anordnung erfordert nur wenige Abstützfunktionen, so daß der Abstützvorgang einfach auslösbar und rasch durchführbar ist. Die Abstützpunkte 38,40 bilden näherungsweise die Ecken eines Quadrats, dessen Diagonalen sich etwa im Mittelpunkt des Schwerpunktskreises der Pumpen- und Mastanordnung schneiden. Wie insbesondere aus Fig. 2 zu ersehen ist, lassen der nach hinten offene U-förmige Tragrahmen 32 und die seitlich im Bereich vor den Hinterachsen angelenkten hinteren Stützbeine 26 im rückwärtigen Bereich des Fahrgestells einen großen Freiraum zur Unterbringung weiterer Aufbauten, insbesondere für die Dickstoffpumpe.

**Patentansprüche**

1.  Fahrbare Betonpumpe mit einem zwei- oder mehrachsigen Fahrgestell (14), einem an einem vorderachsnahen Mastbock (16) um eine vertikale Achse drehbar gelagerten Verteilermast (20), zwei als Teleskopbeine ausgebildeten, mit ihrem Teleskoprohr an einem starr mit dem Mastbock (16) verbundenen Tragrahmen (32) angeordneten, diagonal nach vorne weisenden vorderen Stützbeinen (24) und zwei ausstellbaren hinteren Stützbeinen (26), **dadurch gekennzeichnet**, daß die hinteren Stützbeine (26) im Bereich des rückwärtigen Endes der Teleskoprohre (28) der am Fahrgestell jeweils gegenüberliegenden vorderen Stützbeine (24) um eine vertikale Achse (36) von ihrer parallel zum Fahrgestell (14) nach hinten weisenden Fahrstellung in ihre diagonal nach hinten und außen weisende Abstützstellung schwenkbar gelagert sind.

2. Betonpumpe nach Anspruch 1, **dadurch gekennzeichnet,** daß die hinteren Stützbeine (26) am rückwärtigen Ende je eines der Teleskoprohre (28) angelenkt sind.

3. Betonpumpe nach Anspruch 1 oder 2, **dadurch gekennzeichnet,** daß die Teleskoprohre (28) über Kreuz mit den beiden Schenkeln (30) eines mit dem Mastbock (16) verbundenen, in Draufsicht U-förmig nach hinten offenen Tragrahmens (32) starr verbunden sind.

4. Betonpumpe nach Anspruch 3, **dadurch gekennzeichnet,** daß die hinteren Stützbeine (26) am freien Ende je eines der Tragrahmenschenkel (30) angelenkt sind.

5. Betonpumpe nach einem der Ansprüche 1 bis 4, **dadurch gekennzeichnet,** daß die Teleskoprohre (28) einander in verschiedener Höhe, vorzugsweise im freien Bereich zwischen den Tragrahmenschenkeln (30) kreuzen und im Kreuzungsbereich (34) starr miteinander verbunden sind.

6. Betonpumpe nach Anspruch 5, **dadurch gekennzeichnet,** daß die Teleskoprohre (28) jeweils mit einem weiteren Rohr (29) unter Bildung von Doppelrohren (31) verbunden sind, und daß die Doppelrohre (31) einander paarweise so durchdringen, daß die Teleskoprohre (28) im Durchdringungsbereich durchgehend sind und der Durchgang in den weiteren Rohren (29) durch die durchgehenden Teleskoprohre (28) unterbrochen ist.

7. Betonpumpe nach Anspruch 6, **dadurch gekennzeichnet,** daß die Doppelrohre (31) einander im freien Bereich zwischen den Tragrahmenschenkeln (30) durchdringen.

8. Betonpumpe nach Anspruch 6 oder 7, **dadurch gekennzeichnet,** daß die hinteren Stützbeine (26) auf gleicher Höhe am rückwärtigen Ende je eines der Doppelrohre (31) angeordneten, sich vorzugsweise über die Höhe der Doppelrohre (31) erstreckenden Gabelgelenk (36) angelenkt sind.

9. Betonpumpe nach Anspruch 8, **gekennzeichnet durch** eine am stirnseitigen Ende der hinteren Stützbeine (26) angeformte Lagerhülse (37), die paßgenau zwischen zwei Lagerlappen (36,36') des Gabelgelenks eingreift und dort mit einem durchgehenden Gelenkbolzen (39) gesichert ist.

10. Betonpumpe nach einem der Ansprüche 3 bis 9, **dadurch gekennzeichnet,** daß die Teleskoprohre (28) miteinander und mit den Schenkeln des Tragrahmens (30) verschweißt sind.

11. Betonpumpe nach einem der Ansprüche 1 bis 10, **dadurch gekennzeichnet,** daß der Abstand der Anlenkpunkte (36) der hinteren Stützbeine (26) vom Mastbock (16) kleiner als die Länge der Teleskoprohre (28) ist.

12. Betonpumpe nach einem der Ansprüche 1 bis 11, **dadurch gekennzeichnet,** daß die Abstützpunkte (38, 40) der vier ausgestellten Stützbeine (24,26) näherungsweise die Ecken eines Quadrats bilden, dessen Diagonalen sich etwa im Mittelpunkt der vom Schwerpunkt der fahrbaren Betonpumpe in allen möglichen Verteilermaststellungen überstrichenen Kreisfläche (Schwerpunktskreis) schneiden.

## Claims

1. Mobile concrete pump having a two- or multiple-axle chassis (14), a distributor mast (2Ø) which is mounted to a mast seat (16) near the front axle and rotatable around a vertical axis, two diagonally forward facing frontal support legs (24), which are telescopic legs and disposed with their telescopic pipe on a support frame (32) which is rigidly connected to the mast seat (16), and two extendable rear support legs (26), **characterised in that** the rear support legs (26) in the area of the rearward end of the telescopic pipes (28) of the frontal support legs (24), which are positioned opposite each other on the chassis, are mounted to be pivotable around a vertical axis (36) from their driving position, facing parallel to the chassis (14) to the rear, into their diagonally rearward and outward facing support position.

2. Concrete pump according to claim 1, **characterised in that** the rear support legs (26) are hinged to the rearward end of a respective telescopic pipe (28).

3. Concrete pump according to claim 1 or 2, **characterised in that** the telescopic pipes (28) are intersectingly and rigidly connected to the two shanks (3Ø) of a support frame (32), which is connected to the mast seat (16) and of rearwardly open U-shape, as seen from above

4. Concrete pump according to claim 3, **characterised in that** the rear support legs (26) are hinged to the free end of a respective support-frame shank (3∅).

5. Concrete pump according to one of claims 1 to 4, **characterised in that** the telescopic pipes (28) intersect at different heights, preferably in the free area between the support-frame shanks (3∅), and that they are rigidly connected in the intersecting area (34).

6. Concrete pump according to claim 5, **characterised in that** the telescopic pipes (28) are connected to a respective additional pipe (29) whilst forming double pipes (31), and that the double pipes (31) penetrate each other in pairs so that the telescopic pipes (28) in the penetration area are continuous and the passage in the additional pipes (29) through the continuous telescopic pipes (28) is interrupted.

7. Concrete pump according to claim 6, **characterised in that** the double pipes (31) penetrate each other in the free area between the support-frame shanks (3∅).

8. Concrete pump according to claim 6 or 7, **characterised in that** the rear support legs (26) are hinged to a forked hinge (36), which is located at the same height of a rearward end of a respective double pipe (31) and preferably extends over the height of the double pipes (31).

9. Concrete pump according to claim 8, **characterised by** a mounting sleeve (37) which is integrated at the front end of the rear support legs (26), and which accurately engages between two mounting flaps (36, 36′) of the forked hinge and which is secured thereat by way of a penetrating hinge pin (3∅).

10. Concrete pump according to one of claims 3 to 9, **characterised in that** the telescopic pipes (28) are welded to each other and to the shanks of the support frame (3∅).

11. Concrete pump according to one of claims 1 to 1∅, **characterised in that** the distance between the hinge points (36) of the rear support legs (26) and the mast seat (16) is smaller than the length of the telescopic pipes (28).

12. Concrete pump according to one of claims 1 to 11, **characterised in that** the support points (38, 4∅) of the four extended support legs (24, 26) approximately form the corners of a square, the diagonals of which intersect approximately in the centre point of the circular area (gravity circle) which is covered in all possible distributor-mast positions by the gravity point of the mobile concrete pump.

**Revendications**

1. Pompe à béton mobile, comprenant un châssis (14) à deux ou plusieurs essieux, un mât de distribution (20) monté sur un support de mât (16) disposé à proximité de l'essieu avant de manière à pouvoir tourner autour d'un axe vertical, deux béquilles antérieures (24) conformées en béquilles télescopiques dont le tube télescopique est monté sur un cadre porteur (32) solidaire du support de mât (16), et dirigées en diagonale vers l'avant, et deux béquilles postérieures (26) écartables, **caractérisée en ce** que les béquilles postérieures (26) sont montées, dans la région de l'extrémité postérieure des tubes télescopiques (28) des béquilles antérieures (24) respectivement opposées sur le châssis, de manière à pouvoir pivoter autour d'un axe vertical (36) entre leur position de translation orientée parallèlement au châssis (14) vers l'arrière et une position d'appui orientée en diagonale vers l'arrière et vers l'extérieur.

2. Pompe à béton selon la revendication 1, caractérisée en ce que les béquilles postérieures (26) sont articulées sur l'extrémité postérieure de respectivement l'un des tubes télescopiques (28).

3. Pompe à béton selon l'une des revendications 1 ou 2, caractérisée en ce que les tubes télescopiques (28) sont solidarisées en croix avec les deux branches (30) d'un cadre porteur (32) couplé avec le support de mât (16) et présentant, vu de dessus, une forme en U ouverte vers l'arrière.

4. Pompe à béton selon la revendication 3, caractérisée en ce que les béquilles postérieures (26) sont articulées sur l'extrémité libre de respectivement l'une des branches (30) du cadre porteur.

5. Pompe à béton selon l'une des revendications 1 à 4, caractérisée en ce que les tubes télescopiques (28) se croisent à des hauteurs différentes, de préférence dans la région libre entre les branches (30) du cadre porteur et qu'ils sont solidarisés entre eux dans la région de croisement (34).

6. Pompe à béton selon la revendication 5, caractérisée en ce que les tubes télescopiques (28) sont respectivement raccordés à un tube supplémentaire (29), avec formation de tubes jumelés (31), et que les tubes jumelés (31) s'interpénètrent par paires de manière que les tubes télescopiques (28) présentent une continuité dans la zone de pénétration et que le passage dans les autres tubes (29) est interrompu par les tubes télescopiques (28).

7. Pompe à béton selon la revendication 6, caractérisée en ce que les tubes jumelés (31) s'interpénètrent dans la région libre entre les branches (30) du cadre porteur.

8. Pompe à béton selon l'une des revendications 6 ou 7, caractérisée en ce que les béquilles postérieures (26) sont articulées au même niveau sur une chape (36) disposée à l'extrémité postérieure de respectivement l'un des tubes jumelés (31) et s'étendant de préférence sur la hauteur desdits tubes jumelés (31).

9. Pompe à béton selon la revendication 8, caractérisée en ce qu'elle comprend un coussinet (37) conformé sur l'extrémité frontale des béquilles postérieures (26), qui s'ajuste avec précision entre deux pattes de fixation (36, 36′) de la chape où il est bloqué au moyen d'un axe d'articulation continu (39).

10. Pompe à béton selon l'une des revendications 3 à 9, caractérisée en ce que les tubes télescopiques (28) sont soudés les uns avec les autres et avec les branches (30) du cadre porteur.

11. Pompe à béton selon l'une des revendications 1 à 10, caractérisée en ce que la distance entre les points d'articulation (36) des béquilles postérieures (26) et le support de mât (16) est plus petite que la longueur des tubes télescopiques (28).

12. Pompe à béton selon l'une des revendications 1 à 11, caractérisée en ce que les points d'appui (38, 40) des quatres béquilles écartées (24, 26) forment approximativement les coins d'un carré dont les diagonales se croisent sensiblement au centre de l'aire du cercle (cercle de centre de gravité) balayée par le centre de gravité de la pompe à béton mobile dans toutes les positions possibles du mât de distribution.

FIG.1

EP 0 357 988 B1

FIG. 2